# EUROPEAN PATENT SPECIFICATION

(11) **EP 4 388 213 B1**
(45) Date of publication and mention of the grant of the patent: **10.09.2025**
(21) Application number: 22861818.7
(22) Date of filing: 04.07.2022
(51) Int. Cl.: F16D 3/38, G01L 3/04, G01L 3/14, G01C 19/00

(54) **TORQUE AND ANGULAR VELOCITY SENSOR FOR DRIVESHAFTS**
DREHMOMENT- UND WINKELGESCHWINDIGKEITSSENSOR FÜR ANTRIEBSWELLEN
CAPTEUR DE COUPLE ET DE VITESSE ANGULAIRE POUR ARBRES DE TRANSMISSION

(30) Priority: 24.08.2021 TR 202113336
(43) Date of publication of application: 26.06.2024
(73) Proprietor: Tirsan Kardan Sanayi Ve Ticaret Anonim Sirketi, Yunusemre - Manisa (TR)
(72) Inventor: ISIK, Efe, Yunusemre/Manisa (TR); ALDEMIR, Oguzhan, Yunusemre/Manisa (TR); TARAKÇI, Sedat, Yunusemre/Manisa (TR); SOLMAZ, Turan, Yunusemre/Manisa (TR)
(74) Representative: Yamankaradeniz, Kemal
(86) International application number: PCT/TR2022/050700
(87) International publication number: WO 2023/027662

(56) References cited:
- WO-A1-2017/155446
- WO-A1-2020/222210
- JP-A- 2004 239 822
- US-A1- 2019 025 143
- US-A1- 2019 126 448

## Description

### Technical Field

The invention relates to sensors used in the measurement torque and angular velocity in all driveshafts, particularly motor vehicles, industrial applications, and construction equipment.

### Prior Art

In today' s automotive industry, it is seen to torque measurement and data collection systems that integrated over the driveshaft flange, continuously perform the required tasks and not require a change in the driveshaft design. However, there is no circuit adaptation for the electronic data collection system in mentioned structures. At the same time, there are no products that meet the power requirement in an integrated manner and are suitable for field tests.

The technical literature review revealed the application no. TR2018/08777, which relates to a system for determining the number of revolutions of a driveshaft, comprising at least a magnet and at least a hall sensor, wherein one of said magnet and hall sensor is connected onto either the rotating elements of the driveshaft and the other to a fixed point, and further comprising a detection element for detecting the revolution rate by correlating to the revolution and the pulse created by a result of interaction between the magnet and the hall sensor, when the driveshaft rotates.

As seen, system relates to a system for determining revolutions in driveshafts besides does not mention an embodiment that can provide a solution to the drawbacks mentioned above.

US 2019/025143 A1 relates to a force-torque sensor for capturing forces and torques in a robotic unit, comprising a one-part carrier body which has a cylindrical basic shape and is provided with two connection disks parallel to one another and at least three bridge elements which connect the connection disks to one another and are each assigned at least one measuring point.

Therefore, due to the drawbacks described above and the inadequacy of the existing solutions on the subject, it has become necessary to make an improvement in the relevant technical field.

### Purpose of the Invention

The invention, as defined in claim 1, proposes a system which differs from the embodiments in prior art in having different technical properties and bringing new benefits to the technical field. The purpose of the invention is to develop a sensor design that can simultaneously read shock loads, torque and angular velocity in driveshafts.

Another purpose of the invention is to provide a sensor configuration which can operate under heavy duty conditions (mud, temperature, humidity) and wirelessly transmit the acquired data.

Another purpose of the invention is to provide a sensor configuration which can house, protect from external conditions, seal the electronic circuit and all equipment (battery, cables, sockets, etc.) that will perform the measurement and data collection processes. By this means, an electronic circuit can be adapted to the driveshaft and protected from external effects.

Yet another object of the invention is to provide a sensor configuration which can be assembled to a driveshaft flange and perform measurements without damaging the shaft. The assembly according to the invention is also detachable. After removal, the electronic circuit which will perform measurement and data collection is installed and the removed part is reassembled. Preferably, a structure for mounting a battery is located over the removable part and the battery can be held in place by a support element.

The sensor according to the invention enables operation at high speeds on vehicles and test devices thanks to its lighter weight. Due to its compact size and integrated battery, it allows for uninterrupted data collection at field conditions. The sensor according to the invention is suitable for use in motor vehicles at environmental or endurance tests under special track or road conditions by virtue of its connection structure, geometry as well as its sealed and compact design.

Since the system can be subsequently mounted on the driveshaft as a whole, no change is required to be made on the driveshaft design. It also facilitates testing and instrumentation as it can operate over very long periods without intervention.

While existing sensors in the field are externally mounted to driveshafts, the sensor according to the invention is suitable both for external assembly and mounting on vehicle during the manufacturing of driveshafts thanks to its compact design and connection structure.

The sensor according to the invention is manufactured as light as possible to ensure suitability for operation at high speed particularly during the mentioned field tests. Forces generated during motion are minimized thanks to its light design and small turning diameter, and no undesirable / negative effects are produced on the vehicle. Furthermore, the fully symmetrical design prevents any balance issues.

In order to achieve the purposes described above, the invention relates to a torque and angular velocity sensor for use in measuring torque and angular velocity in driveshafts, characterized by comprising:
- a carrier body which provides assembly of the torque and angular velocity sensor to the driveshaft,
- a circuit which measures angular velocity and torque,
- a protective container which is glued to the carrier body to protect the circuit from external effects,
- a battery referencing to position the battery and the circuit in the protective container,
- an external cover positioned on the carrier body to provide protection against external factors.

The below drawings and the detailed description set out with reference to the accompanying drawings provide for a clearer understanding of the structural and characteristic properties and all benefits of the invention. For this reason, the evaluation should be made by taking these figures and detailed explanation into consideration.

### Brief Description of the Drawings

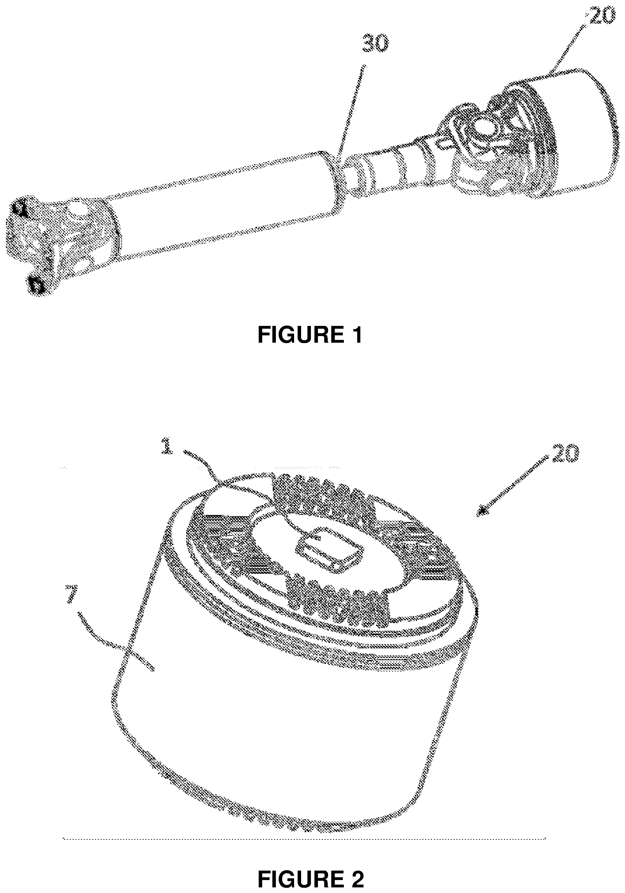

- **Figure 1**: is a positioning view of the torque measurement sensor which is the subject of the invention on a driveshaft.
- **Figure 2**: is an exterior view of the torque measurement sensor which is the subject of the invention.
- **Figure 3**: is an exploded view of the torque measurement sensor which is the subject of the invention.

The drawings do not necessarily have to be scaled and details which are not necessary to understand the invention may be omitted. Furthermore, elements which are at least substantially identical, or which have at least substantially identical functions are designated by the same number.

### Description of Part References

- 1.: Cover
- 2.: Glue
- 3.: Sealing element
- 4.: Battery referencing
- 5.: Battery
- 6.: Protective container
- 7.: External cover
- 8.: Bottom referencing part
- 9.: Carrier body
- 10.: Top referencing part
- 11.: Circuit
- 12.: Torque measuring element (Strain Gauge)
- 20.: Torque and angular velocity sensor
- 30.: Driveshaft

### Detailed Description of the Invention

In this detailed description, preferred embodiments of the invention are explained only for a better understanding of the subject and without any limiting effect.

The invention relates to sensors used in the measurement torque and angular velocity sensor (20) in all driveshafts (30), particularly motor vehicles, industrial applications, and construction equipment.

The torque and angular velocity sensor (20) according to the invention is assembled to the driveshaft (30) by means of the carrier body (9). Measurement is taken over the carrier body (9) by virtue of the circuit (11) which measures angular velocity and torque. The protective container (6) is glued (2) to the carrier body (9). The cover (1) is assembled to the protective container (6) together with the sealing element (3) that provides sealing. The battery referencing part (4), the battery (5) and the circuit (11) is positioned inside the protective container (6).

The bottom referencing part (8) and the top referencing part (10) are glued (2) on the carrier body (9). The glued (2) bottom and top referencing parts (8, 10) provide in positioning the external cover (7), and also in assembly and disassembly of the external cover (7) through their threads.

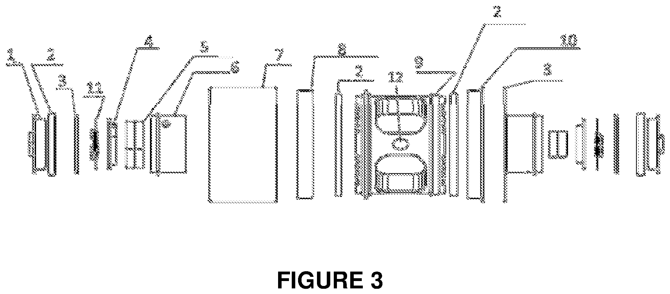

As shown in Figure 3, the torque measuring element (12) (strain gauge) is located on the carrier body (9). The connection between the torque measuring element (12) and the measurement circuit (11) is made through the cable connection hole inside the torque and angular velocity sensor (20), therefore no extra cabling is required on the part of the user. Also, no cables are visible from the outside. The external cover (7) protects the carrier body (9) and the torque measuring element (12) from external factors and sealing is provided by way of the threads and the gasket / sealing element (3).

Said protective container (6), battery (5), battery referencing part (4), sealing element (3) (gasket) and cover (1) are essential elements for adapting the torque and angular velocity sensor (20) of the electronic circuit (11) to the carrier body (9). The circuit (11) performs its functions without being subject to external effects and without requiring any additional cabling.

The torque and angular velocity sensor (20) can operate both on a test device and a vehicle at high speeds thanks to its flange design and dimensions. It can operate at high speeds on test devices and vehicles without causing an internal balance problem by virtue of its minimized turning diameter and symmetrical design.

## Claims

1. A torque and angular velocity sensor (20) for use in measuring torque and angular velocity in driveshafts (30), comprising:
• a carrier body (9) which provides assembly of the torque and angular velocity sensor (20) to the driveshaft (30),
• a circuit (11) which measures angular velocity and torque,
**characterized by** further comprising
• a protective container (6) which is glued (2) in the carrier body (9) with glue and provides protection of the circuit (11) from external effects,
• a battery referencing (4) which provides a battery (5) and the circuit (11) to be positioned in the protective container (6),
• an external cover (7) positioned on the carrier body (9) to provide protection against external factors.

2. The torque and angular velocity sensor (20) according to Claim 1, **characterized by** comprising a cover (1) which is assembled to the protective container (6) together with a sealing element (3) that provides sealing.

3. The torque and angular velocity sensor (20) according to Claim 1, **characterized by** comprising a bottom referencing part (8) and a top referencing part (10) which provide positioning of the external cover (7).

4. The torque and angular velocity sensor (20) according to Claim 1, **characterized by** comprising a top referencing part (10) which provides a thread to hold the external cover (7) and to allow assembly and disassembly of the external cover (7).

5. The torque and angular velocity sensor (20) according to Claim 1, **characterized by** comprising a torque measuring element (12) which is positioned on the carrier body (9) and the connection of the measurement circuit (11) is made through a cable connection hole inside the torque and angular velocity sensor (20).

## Patentansprüche

1. Drehmoment- und Winkelgeschwindigkeitssensor (20) zur Verwendung beim Messen von Drehmoment und Winkelgeschwindigkeit bei Antriebswellen (30), umfassend:
• einen Trägerkörper (9), der eine Montage des Drehmoment- und Winkelgeschwindigkeitssensors (20) an der Antriebswelle (30) bereitstellt,
• eine Schaltung (11), die Winkelgeschwindigkeit und Drehmoment misst,
**dadurch gekennzeichnet, dass** er ferner Folgendes umfasst:
• einen Schutzbehälter (6), der mit Klebstoff in den Trägerkörper (9) eingeklebt (2) ist und der Schaltung (11) Schutz vor äußeren Einwirkungen bereitstellt,
• eine Batteriereferenzierung (4), die bereitstellt, dass eine Batterie (5) und die Schaltung (11) in dem Schutzbehälter (6) positioniert werden,
• eine äußere Abdeckung (7), die auf dem Trägerkörper (9) positioniert ist, um Schutz gegen äußere Faktoren bereitzustellen.

2. Drehmoment- und Winkelgeschwindigkeitssensor (20) nach Anspruch 1, **dadurch gekennzeichnet, dass** er eine Abdeckung (1) umfasst, die zusammen mit einem Abdichtungselement (3), das eine Abdichtung bereitstellt, an dem Schutzbehälter (6) montiert ist.

3. Drehmoment- und Winkelgeschwindigkeitssensor (20) nach Anspruch 1, **dadurch gekennzeichnet, dass** er einen unteren Referenzierungsteil (8) und einen oberen Referenzierungsteil (10) umfasst, die eine Positionierung der äußeren Abdeckung (7) bereitstellen.

4. Drehmoment- und Winkelgeschwindigkeitssensor (20) nach Anspruch 1, **dadurch gekennzeichnet, dass** er einen oberen Referenzierungsteil (10) umfasst, der ein Gewinde bereitstellt, um die äußere Abdeckung (7) zu halten und eine Montage und Demontage der äußeren Abdeckung (7) zu ermöglichen.

5. Drehmoment- und Winkelgeschwindigkeitssensor (20) nach Anspruch 1, **dadurch gekennzeichnet, dass** er ein Drehmomentmesselement (12) umfasst, das an dem Trägerkörper (9) positioniert ist, und die Verbindung der Messschaltung (11) durch ein Kabelverbindungsloch innerhalb des Drehmoment- und Winkelgeschwindigkeitssensors (20) hergestellt ist.

## Revendications

1. Capteur de couple et de vitesse angulaire (20) destiné à être utilisé pour mesurer le couple et la vitesse angulaire d'arbres de transmission (30), comprenant :
• un corps de support (9) qui assure l'assemblage du capteur de couple et de vitesse angulaire (20) à l'arbre d'entraînement (30),
• un circuit (11) qui mesure la vitesse angulaire et le couple, caractérisé en comprenant en outre
• un récipient de protection (6) qui est collé (2) dans le corps de support (9) avec de la colle et assure la protection du circuit (11) contre les effets extérieurs,
• un référencement de batterie (4) qui fournit une batterie (5) et le circuit (11) à positionner dans le récipient de protection (6),
• un couvercle extérieur (7) positionné sur le corps de support (9) pour fournir une protection contre les facteurs extérieurs.

2. Capteur de couple et de vitesse angulaire (20) selon la revendication 1, caractérisé en comprenant un couvercle (1) qui est assemblé au récipient de protection (6) ensemble avec un élément d'étanchéité (3) qui assure l'étanchéité.

3. Capteur de couple et de vitesse angulaire (20) selon la revendication 1, caractérisé en comprenant une partie de référencement inférieure (8) et une partie de référencement supérieure (10) qui assurent le positionnement du couvercle extérieur (7).

4. Capteur de couple et de vitesse angulaire (20) selon la revendication 1, caractérisé en comprenant une partie de référencement supérieure (10) qui fournit un filetage pour maintenir le couvercle extérieur (7) et pour permettre l'assemblage et le désassemblage du couvercle extérieur (7).

5. Capteur de couple et de vitesse angulaire (20) selon la revendication 1, caractérisé en comprenant un élément de mesure de couple (12) qui est positionné sur le corps de support (9) et la connexion du circuit de mesure (11) est réalisée à travers un trou de connexion de câble à l'intérieur du capteur de couple et de vitesse angulaire (20).
